# EUROPEAN PATENT APPLICATION

(11) **EP 2 660 298 A1**
(43) Date of publication of application: **06.11.2013**
(21) Application number: 13166077.1
(22) Date of filing: 30.04.2013
(51) Int. Cl.: C09K 8/68, C09K 8/70

(54) **Composite solids system to prepare polymer solutions for hydraulic fracturing treatments**

(30) Priority: 30.04.2012 US 201213460133
(71) Applicant: Trican Well Service Ltd., Calgary Alberta AB T2Z 4M3 (CA)
(72) Inventor: Powell, Ronald Joseph, Humble, Texas 77338 (US); Zamora, Frank, San Antonio, Texas 78232 (US); Kakadjian, Sarkis, The Woodlands, Texas 77382 (US)
(74) Representative: Lincoln, Matthew

(57) **Abstract**

A method of reducing the cost and environmental impact of chemicals used in hydraulic fracturing is to use multiple chemicals that are pre-mixed and then formed into a single solid blended mixture. By forming at least two chemicals into a single solid mixture, the complexity involved in transporting multiple solid or liquid chemicals is avoided. If the solid chemicals were merely premixed they would tend to segregate during shipping, handling, and storage altering the concentration of the chemical mix as it is pumped downhole. Simply having less equipment on the wellsite increases the accuracy of the well treating process and decreases the likelihood of a time consuming and thus costly delay due to equipment failure.

## Description

### Background to the invention

Hydraulic fracturing is a common and well-known enhancement method for stimulating the production of natural gas. The process involves injecting fluid down a wellbore at high pressure. The fracturing fluid is typically a mixture of water and proppant. The proppant may be made of natural materials or synthetic materials.

Generally the fracturing process includes pumping the fracturing fluid from the surface through a tubular. The tubular has been prepositioned in the wellbore to access the desired hydrocarbon formation and has been sealed both above and below the formation to isolate fluid flow either into or out of the desired formation to prevent unwanted fluid flow such as loss into the formation. Pressure, also known as a hydraulic fracturing treatment, is then provided from the surface to the desired hydrocarbon formation in order to open a fissure or crack in the hydrocarbon formation.

Hydraulic fracturing treatments performed in shale formations, commonly known as unconventional formations, are often conducted at high pumping rates, typically 100 barrels of treating fluid or greater per minute. Typically large amounts of fluid are required in a typical hydraulic fracturing operation, many times in excess of 50,000 barrels of treating fluid. Additionally, chemicals are often added to the fluid along with proppant to aid in proppant transport, friction reduction, wettability, pH control and bacterial control, etc.

After the well has been fractured and appropriately treated, the fluid is allowed to flow back from the hydrocarbon formation to the wellbore and then to the surface.

In many instances multiple chemicals may be necessary in identical locations within the hydrocarbon formation or within the wellbore. In those instances, without very thorough mixing of various chemicals, the precise amount of chemical desired may not be appropriately distributed through the hydrocarbon formation. The conventional method is to prepare a polymer solution to be used in the fracturing treatment. The polymer solution may be prepared from a concentrated liquid emulsion of a friction reducing polymer, typically a high molecular weight polyacrylamide-based polymer. The liquid emulsion is added to a stream of mix water in a continuous process often referred to as pumping on the fly. Additionally, it is sometimes necessary to add other chemical additives to the stream containing the friction reducer. The additives include biocide, scale inhibitor, clay protecting material, breaker, surfactant, and others. In the past, these additives have been delivered as liquids for ease of handling, ease of metering, and ease of pumping the additives downhole. The number of additives delivered into the mix water combined with the volume of each additive result in a complex operating environment prone to mistakes due the large number of hoses and additive pumps utilized during the operation. This causes inconsistencies with the final makeup of the hydraulic fracturing fluid pumped into the wellbore.

### Summary of the invention

One embodiment of this invention provides a process for providing chemicals in a form that facilitates their introduction into a hydrocarbon formation. Such a process provides a solid compound that may be introduced to the formation, where the solid compound is not subject to segregation during storage, shipping, and handling. Segregation is typically a sorting of the various chemicals into discrete groups and may be caused by materials having different properties such as density or varying sizes.

By having a solid compound, inconsistencies in the ratio of the chemicals that are being pumped and utilized downhole can be reduced. Additionally, the complexity of the pumping system can be reduced.

Using a solid chemical in a wellbore may reduce the environmental concerns because the solid chemicals are up to 100 percent active as compared to a liquid chemical that is about 30 percent active. By using a solid form of the friction reducing polymer, the chemicals such as the emulsifying agents, surfactants, and oils that are used to prepare the emulsion form of the friction reducer polymer are not pumped downhole. Also, by using a solid chemical the total amount of chemicals that may be used in a particular well may be reduced because of the improved efficiency of the solid forms of chemicals. By having a solid compound any mixing errors on the jobsite are eliminated as a result of the desired solid compounds are all locked together in the appropriate ratios, resulting in a single, solid compound for use in a particular well.

Segregation is a problem that is eliminated by having one solid compound that is delivered to the wellsite location. Segregation is a problem that typically occurs when chemicals are premixed and then subject to any vibration or other energy that may tend to allow the various chemical to move in relation to one another. As the chemicals move they tend to separate based on many factors such as size of the particles and density. If the segregated chemicals were pumped downhole without further mixing the local chemical makeup of the fluid could vary widely preventing a thorough treatment of the wellbore and hydrocarbon formation.

In one embodiment of the present invention a solid chemical granule may be used as a base. The base is then loaded into a drum, the drum is rotated so that the base is airborne or in free fall for a moment. During that moment when the base is in free fall a second chemical is then sprayed onto the surface of the base thereby coating the base's surface. The now coated base is then quickly dried before the base can stick to other particles in the drum. Warm air blown through the drum, infrared heat, ultraviolet light or any other appropriate means may be used to quickly dry the second chemical. The process is then repeated until the appropriate amount of the second chemical is applied to the base. Additionally, the process may be repeated to apply additional coatings of other chemicals.

In another embodiment a first solid chemical is reduced to a fine powder, then at least a second, although additional solid chemicals could be used, solid chemical is reduced to a fine powder. The now powdered chemicals are then blended in the appropriate amounts until the desired blended mixture is achieved. A portion of the blended chemical mixture is then removed from the blender and placed into a pill or tablet press. The blended mixture is placed into a die in the pill press and sufficient pressure is applied to compress the powder to form a pill or tablet. The tablet can be rough formed since the size and weight of the individual pill or tablet does not matter. It is the ratio of the chemicals in each tablet that matter not the individual tablet size as it is the combined weight of possibly thousands or millions of the tablets that are required in the well that is of concern.

The powder may have a particle size greater than 150 microns. Alternatively, the powder has a particle size from about 150 microns to about 50 microns. In another embodiment, the powder has a particle size less than 50 microns.

In another embodiment a first chemical and a second chemical are mixed together in the appropriate amounts to form a wet-cake. The wet-cake is then dried and ground into a powder. The size of each granule, pill, or tablet does not need to be precisely controlled in order to provide the appropriate amount in the appropriate ratios in the well. However, the size of each granule, pill, or tablet may be controlled in order to obtain the desired rate of dissolution of each grain, pill, or tablet.

In another embodiment, pellets are formed from the wet cake. The wet cake may be ground into pellets.

In still another embodiment a friction reducing polymer is polymerized. Following the polymerization, a second or more chemicals may be added to the wet-cake. The wet-cake is then dried and ground into a powder. Again, the size of each granule, pill, or tablet does not need to be precisely controlled in order to provide the appropriate amount in the appropriate ratios in the well. However, the size of each granule, pill, or tablet may be controlled to in order to obtain the desired rate of dissolution of each granule, pill, or tablet.

The solid granules, pills, or tablets may then be mixed with the well treating fluid to facilitate the delivery of multiple well-treatment additives by one solid additive into the wellbore where they may be utilized. In certain instances it may be desirable for the operator to use the solid granules, pills, tablets, or pellets to prepare a liquid concentrate at the wellsite on the surface. Once the liquid concentrate is prepared the existing equipment at the wellsite, such as a mixing chamber, may be used to add the liquid concentrate to the fracturing fluid prior to the fracturing fluid being pumped downhole.

A range of chemicals may be used as the active ingredient in materials useful in treating a hydrocarbon producing well. The chemicals that are the active ingredients may be mixed, solidified, and then pelletized so that they may be carried into a wellbore or hydrocarbon formation during fracturing. Such chemicals that are the active ingredients in materials useful for treating a hydrocarbon well include friction reducers, gelling agents, clay control systems, biocides, scale inhibitors, chelating agents, gel breakers, antifoamers, crosslinkers, corrosion inhibitors, de-emulsifiers, foaming agents, surfactants, agglomerating agents, and tracers. Such active ingredients in materials useful for treating a hydrocarbon well may not include binders or fillers. The active ingredients are hydratable or water soluble so that they may be dissolved in at least the fracturing fluid. The most desirable binders or fillers may also be water soluble and non-damaging to the formation and proppant pack. A pellet may be any size and includes granules, pills, and tablets. Pellets comprise two or more active ingredients for treating a wellbore.

Preferably, the composition of the pellets reflects the composition of the mixed chemicals.

In another aspect of the invention, there is provided a process for manufacturing a well treatment material comprising:
introducing a granule of a first chemical compound into a vessel;
rotating the vessel containing the granule;
spraying an at least second liquid chemical onto the granule;
wherein the first chemical compound and the at least second liquid chemical compound are materials useful for treating a hydrocarbon producing well; and
forcing a gas around the granule to flash dry the at least second liquid chemical onto the granule.

The materials may be useful for treating a well bore are a friction reducer, a gelling agent, a clay control agent, a biocide, a scale inhibitor, a chelating agent, a gel-breaker, a defoamer, a crosslinker, an anti-sludging agent, a corrosion inhibitor, a de-emulsifier, a foaming agent, an agglomerating agent, a surfactant, or a tracer. The pellet may be comprised of at least three more ingredients active for treating a wellbore, and may be comprised of at least four or more ingredients active for treating a wellbore. Where there is a third chemical compound, the third chemical compound is preferably also useful for treating a hydrocarbon producing well. The process for manufacturing a well treatment material may comprise combining the third chemical compound with the first chemical compound and the second chemical compound.

### Brief description of the drawings

There will now be described, by way of example only, various embodiments of the invention with reference to the drawings, of which:

Figure 1 depicts a wellbore during a perforation process.

Figure 2 depicts a particular hydrocarbon formation during a well treatment procedure.

Figure 3 depicts a schematic of a mixing process.

Figure 4 depicts a mechanical solids forming process.

Figure 5 depicts a spray on coating process.

Figure 6 depicts a coated granule.

### Detailed description of preferred embodiments

The description that follows includes exemplary apparatus, methods, techniques, or instruction sequences that embody techniques of the inventive subject matter. However, it is understood that the described embodiments may be practiced without these specific details.

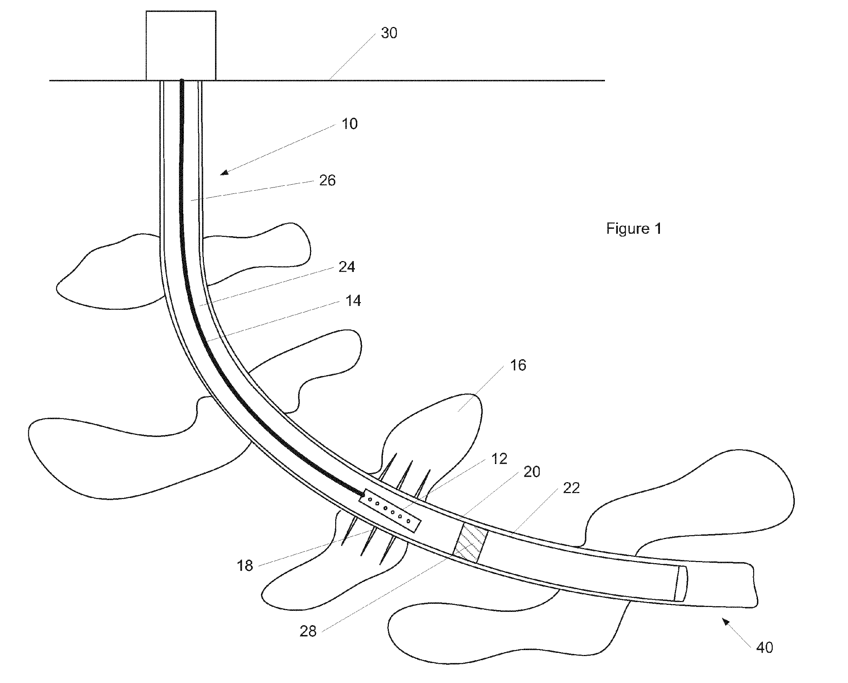

As depicted in Figure 1, typically, after the well is bored but before it begins production the well is hydraulically fractured to enhance the well's production capability. In newly drilled horizontal wellbore 10, the fracturing process is commonly performed in conjunction with a technique known in the industry as plug and perf. In this process, perforating guns 12 are placed into the horizontal wellbore 10 and tethered by wireline 14. The perforating guns 12 are then pumped to the desired location, such as adjacent to the hydrocarbon formation 16, in the horizontal wellbore 10 and then discharged creating a series of perforations 18 through the casing 20 and the surrounding cement sheath 22 thereby connecting the interior of the casing 24 with the surrounding hydrocarbon bearing formation 16. In the first stage of treating a horizontal wellbore 10, the section furthest from the vertical portion 26 of the horizontal wellbore 10 is treated, this section is known as the toe 40 of the horizontal wellbore 10. As each successively higher hydrocarbon bearing formation 16 is perforated, perforating guns 12 along with a packer 28 are placed into the horizontal wellbore 10. Packer 28 is shown as already set in the interior of the casing 24 to isolate the previously fractured toe 40. The fracturing operation is again performed and the plug and perforation operation is repeated working in the direction from the toe 40 towards the vertical portion 26 of the horizontal wellbore 10. Variations of this technique are used in openhole horizontal wells using downhole assemblies that isolate sections of the wellbore.

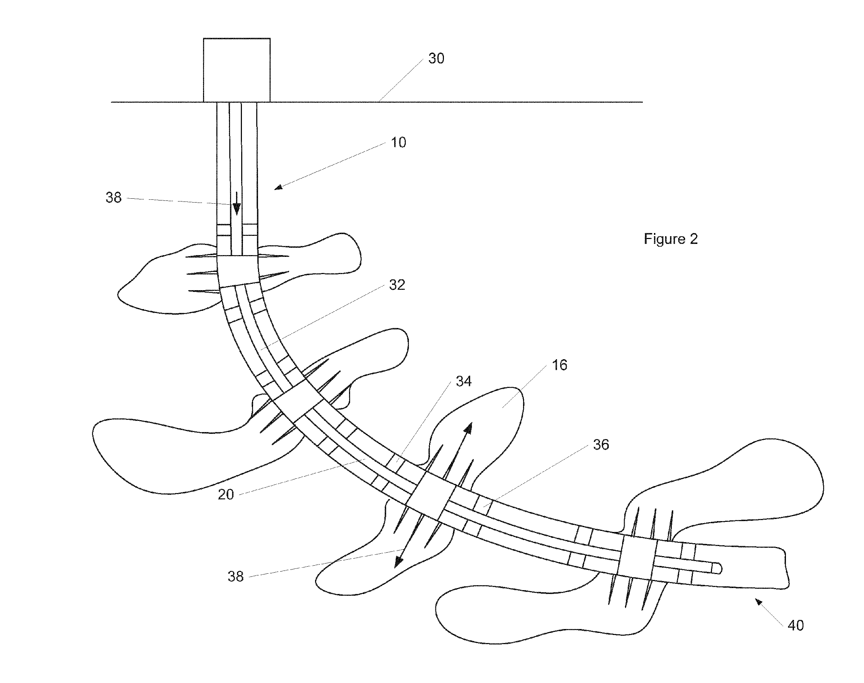

Typically, as depicted in Figure 2, part of the fracturing process each hydrocarbon bearing formation 16 is treated. The treatment may include fracturing the hydrocarbon bearing formation 16 and then chemically treating the fractured section. Typically, to fracture the well, a production tubing 32 is run into the horizontal wellbore 10 to allow access to a hydrocarbon bearing formation 16. The production tubing 32 is then sealed above and below the hydrocarbon producing zone by annular seals or packers 34 and 36 between the production tubing 32 and the interior wall of the casing 20. Fracturing fluid directional arrow 38 is then pumped down the production tubing and out of a port in the production tubing and into the hydrocarbon producing formation. Pressure is then applied to the fracturing fluid from the surface through the production tubing and into the hydrocarbon producing formation to fracture the rock and then to expand the cracks that are formed in the rock so that a gap is formed in the rock formation.

Proppant may be added to the fracturing fluid. Proppant may be sand, walnut shells, ceramics, aluminum beads, or any other small material that has high compressive strength. As the fracturing fluid fractures and expands the rocks to form gaps, the fracturing fluid carries the proppant into the gaps. Once the operator determines that the hydrocarbon producing zone has been sufficiently fractured, the pressure from the surface is stopped. The gaps formed in the rock during the fracturing process are held open by the proppant that was carried in by the fracturing fluid.

In addition to adding proppant to the fracturing fluid, chemicals need to be added to the fracturing fluid, for example, to facilitate the fracturing process and the subsequent production of hydrocarbons from the formation. In particular friction reducers, gelling agents, clay control systems, biocides, scale inhibitors, chelating agents, gel breakers, antifoamers, crosslinkers, anti-sludging agents, a corrosion inhibitors, de-emulsifiers, foaming agents, agglomerating agents, and tracers may be useful in treating a well.

Typically large amounts of fluid are used to fracture a well. Consequently large amounts of chemicals may be used in the hydraulic fracturing process. By utilizing a single solid additive the total amount of chemicals used may be reduced as the chemicals used to form liquid forms of the individual additives are eliminated; chemicals such as solvents, carriers and surfactants can be omitted. By utilizing a mixing process prior to pumping the chemicals into a well many issues that arise due to segregation or poor mixing of the various chemicals may be avoided. Such a reduction in the total amount of chemicals used reduces the cost of production and reduces the amount of chemically contaminated fluids produced from the well.

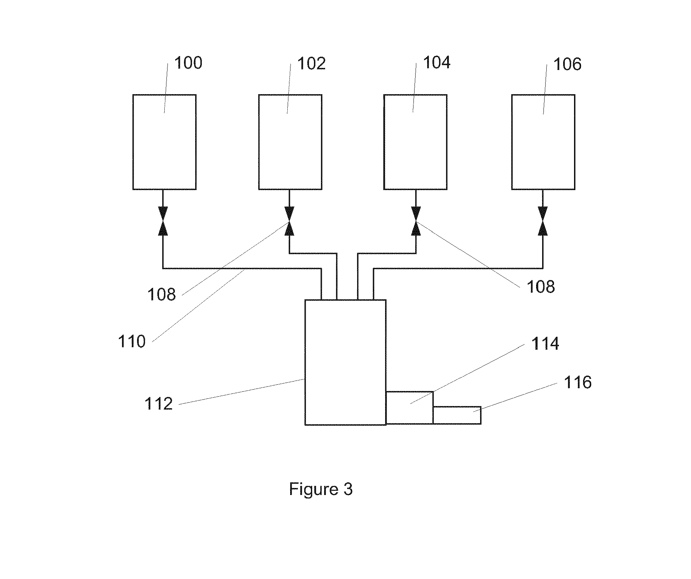

Figure 3 depicts a process for combining multiple chemicals that are useful in a wellbore into a solid form. A first chemical that is useful in a wellbore is placed in a first storage hopper 100. A second chemical, also useful in a wellbore, is placed in a second storage hopper 102. A third storage hopper 104 may contain a binding agent. Preferably an inert binding agent may be used. Finally, if necessary, a wetting agent may be placed in a first tank 106. Each of the first and at least second chemicals, the binding agent, and the wetting agent pass through metering devices 108 then into a conduit 110 where they are delivered into a mixer 112.

The first and at least second chemicals, the binding agent, and the wetting agent are delivered into the mixer 112 and mixed together until they form an appropriately blended mixture. If a wetting agent was used to form the blended mixture, the blended mixture may be extruded through a die 114. As the blended mixture exits the die a blade 116 may cut the blended mixture into appropriately sized pellets that may be useful in well treatments. Once the pellets have been extruded and cut to the proper size, the pellets are dried. Drying, depends upon the binder that was used, but may be accomplished by heating the pellets, by blowing air across the pellets, by exposing the pellets to an ultraviolet light source, or even exposing the pellets to the sun.

If a wetting agent is not used in conjunction with the first and at least second chemicals and the binding agent to form the blended mixture a dry pelletizing process must be used to form pellets from the blended mixture. For instance a cold compression process may be used. In certain instances, depending upon the first and at least second chemicals, a binding agent may not be necessary.

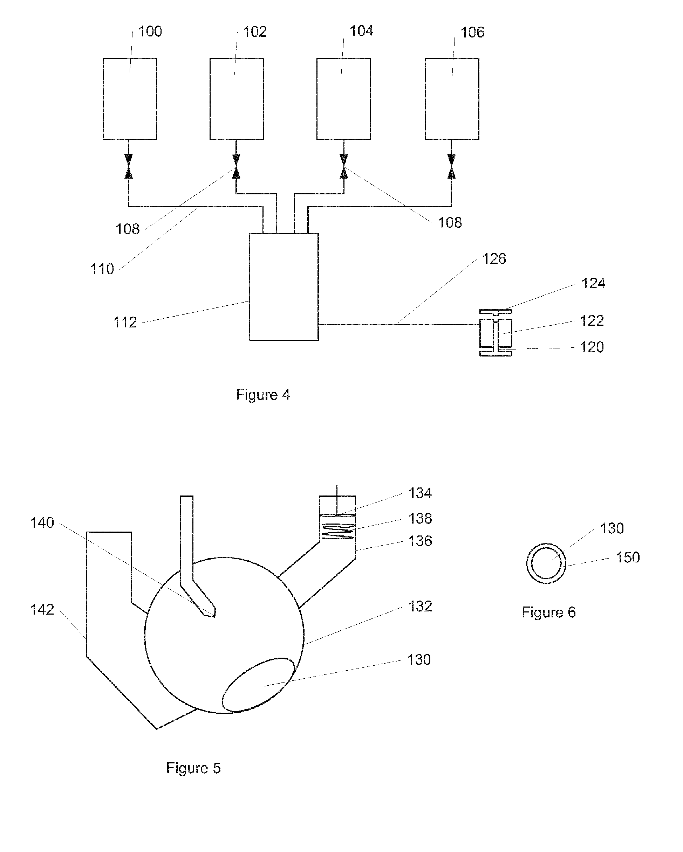

In a cold compression process, as depicted in figure 4, pressure is applied to a powder to form the powder into a relatively hard shape. In one embodiment a lower ram 120 moves from a higher position to a lower position in a die 122. Once the ram is in the lower position a small portion of the blended mixture is removed from the mixer 112 and conveyed into the die via conduit 126. An upper ram 124 then moves downward toward the die to apply pressure to the powder in the die 122. Once sufficient pressure has been applied to form the blended mixture into a solid shape or pellet the upper ram 124 is retracted. The lower ram 120 then moves from its lower position to a higher position thereby ejecting the pellet from the die. The process may be repeated until all of the blended mixture is removed from the mixer 112.

In another embodiment of the present invention, as depicted in Figure 5, a chemical granule may be used as a base or the pelletized or tablicized blended mixture as previously discussed may utilized as a base. In this particular embodiment a granule or granules of a friction reducer 130 may be used as a base upon which other chemicals may be added as desired by a spray-on coating process. The granules 130 are placed in a perforated drum 132. A blower 134 provides filtered airflow via ductwork 136 into and ductwork 142 out of the perforated drum 132. A heater 138 in the ductwork 136 allows the operator to control the temperature of the airflow. A supply tank and an air or pressurized gas supply delivers the coating solution to the nozzles 140 inside of the perforated drum 132.

The coating solution is at least partially made up of the desired chemical that is useful in a wellbore. The perforated drum 132 rotates while the coating solution is atomized as it exits the nozzles 140 creating a fine mist that is directed at the granules 130 in the perforated drum 132. The heated air provided by the blower 134 dries the coating just after it contacts each granule 130.

As depicted in Figure 6 the coating 150 dries onto each granule 130 as a thin solid layer of the chemical in the coating solution is deposited onto the granule 130. Typically each layer is thin so that the layer will dry very quickly therefore many layers may be required in order to deposit the required amount of the desired chemical onto each granule. Other techniques for coating include the process known as fluidized bed coating.

In still another embodiment a friction reducing polymer is created by the polymerization of the appropriate monomers, surfactants and initiators. Compatible additives that do not interfere with the polymerization or subsequent processing may be added to the reaction mixture before the polymerization reaction is initiated. Additives not compatible with the polymerization reaction can be added post-reaction. In cases, where the reaction product is a solution, required additives (not already present) can be added to the solution before the drying step. Drum drying and spray drying are common techniques used to remove unwanted solvents yielding a dry finished product. In cases where the polymerization product is formed into a wet-cake, following the polymerization a second or more chemicals may be added to the wet-cake. The wet-cake is then dried and processed into a powder. Again, the size of each granule, pill, or tablet does not need to be precisely controlled in order to provide the appropriate amount in the appropriate ratios in the well. However, the size of each granule, pill, or tablet may be controlled to in order to obtain the desired rate of dissolution of each grain, pill, or tablet.

Many different compounds that are used in downhole hydrocarbon production may be combined into a single solid compound to simplify the fracturing operation, to minimize contamination, to minimize shipping hazards, and to decrease the total volume of chemicals used in a well. In particular friction reducers, gelling agents, clay control systems, biocides, scale inhibitors, chelating agents, gel breakers, antifoamers, crosslinkers, antisludging agents, a corrosion inhibitors, de-emulsifiers, foaming agents, surfactants, agglomerating agents, and tracers may be useful in treating a well.

Polyacrylamide, polyacrylic acid, polyacrylate polymers and copolymers and terpolymers and cationic polyacrylamides and derivatives of these polymers are used typically as friction reducers at low concentrations for all temperatures ranges.

Present preferred gelling agents include guar gums, hydroxypropyl guar, carboxymethyl hydroxypropyl guar, carboxymethyl guar, and carboxymethyl hydroxyethyl cellulose. Suitable hydratable polymers may also include synthetic polymers, such as polyvinyl alcohol, polyacrylamides, poly-2-amino-2-methyl propane sulfonic acid, and various other synthetic polymers and copolymers. Other examples of such polymer include, without limitation, guar gums, high-molecular weight polysaccharides composed of mannose and galactose sugars, or guar derivatives such as hydropropyl guar (HPG), carboxymethyl guar (CMG). carboxymethylhydropropyl guar (CMHPG), hydroxyethylcellulose (HEC), carboxymethylcellulose (CMC), hydroxypropylcellulose (HPC), carboxymethylhydroxyethylcellulose (CMHEC), xanthan, scleroglucan, polyacrylamide, polyacrylate polymers and copolymers.

Clay control additives may include the use of flax seed gum and up to 70,000 ppm of potassium or ammonium cations, the use of an acid salt of alkaline esters, the use of aliphatic hydroxyacids with between 2-6 carbon atoms, the use of cationic allyl ammonium halide salts, the use of poly allyl ammonium halide salts, the use of polyols containing at least 1 nitrogen atom preferably from a diamine, the use of primary diamine salt with a chain length of 8 or less, the use of quaternized trihydroxyalkylamines or choline derivatives, and the use of quaternary amine-based cationic polyelectrolyte and salts. The cation of the salts may be a divalent salt cation, a choline cation, or certain N-substituted quaternary ammonium salt cations.

Any desired non-oxidating biocide including aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, Tetrahydro-3,5-dimethyl-2H-1,3,5-thiadiazine-2-thione and triazine derivatives.

Any desired oxidating biocides including hypochlorite and hypobromite salts, stabilized bromine chloride, hydroxyl radicals, chloramines, chlorine dioxide, chloroisocyanurates, halogen-containing hydantoins, and hydrogen peroxide and peracetic acid.

Scale control additives including chelating agents, may be Na, K or NH 4⁺ salts of EDTA; Na, K or NH4⁺ salts of NTA; Na, K or NH.sub.4.sup.+ salts of Erythorbic acid; Na, K or NH.sub.4 .sup.+ salts of thioglycolic acid (TGA); Na, K or NH.sub.4 .sup.+ salts of Hydroxy acetic acid; Na, K or NH.sub.4.sup.+ salts of Citric acid; Na, K or NH.sub.4 .sup.+ salts of Tartaric acid or other similar salts or mixtures or combinations thereof. Suitable additives that work on threshold effects, sequestrants, include, without limitation: Phosphates, e.g., sodium hexamethylphosphate, linear phosphate salts, salts of polyphosphoric acid, Phosphonates, e.g., nonionic such as HEDP (hydroxythylidene diphosphoric acid), PBTC (phosphoisobutane, tricarboxylic acid), Amino phosphonates of: MEA (monoethanolamine), NH.sub.3, EDA (ethylene diamine), Bishydroxyethylene diamine, Bisaminoethylether, DETA (diethylenetriamine), HMDA (hexamethylene diamine), Hyper homologues and isomers of HMDA, Polyamines of EDA and DETA, Diglycolamine and homologues, or similar polyamines or mixtures or combinations thereof; Phosphate esters, e.g., polyphosphoric acid esters or phosphorus pentoxide (P.sub.2O.sub.5) esters of: alkanol amines such as MEA, DEA, triethanol amine (TEA), Bishydroxyethylethylene diamine; ethoxylated alcohols, glycerin, glycols such as EG (ethylene glycol), propylene glycol, butylene glycol, hexylene glycol, trimethylol propane, pentaeryithrol, neopentyl glycol or the like; Tris & Tetrahydroxy amines; ethoxylated alkyl phenols (limited use due to toxicity problems), Ethoxylated amines such as monoamines such as MDEA and higher amines from 2 to 24 carbons atoms, diamines 2 to 24 carbons carbon atoms, or the like; Polymers, e.g., homopolymers of aspartic acid, soluble homopolymers of acrylic acid, copolymers of acrylic acid and methacrylic acid, terpolymers of acylates, AMPS, etc., hydrolyzed polyacrylamides, poly malic anhydride (PMA); or the like; or mixtures or combinations thereof.

A suitable crosslinking agent can be any compound that increases the viscosity of the fluid by chemical crosslinking, physical crosslinking, or any other mechanisms. For example, the gellation of a hydratable polymer can be achieved by crosslinking the polymer with metal ions including boron, zirconium, and titanium containing compounds, or mixtures thereof. One class of suitable crosslinking agents are organotitanates. Another class of suitable crosslinking agents are borates.

Typically gel-breakers are either oxidants or enzymes which operate to degrade the polymeric gel structure. Most degradation or "breaking" is caused by oxidizing agents, such as persulfate salts (used either as is or encapsulated), chromous salts, organic peroxides or alkaline earth or zinc peroxide salts, or by enzymes.

Presently preferred corrosion inhibitors include, but are not limited to quaternary ammonium salts such as chloride, bromides, iodides, dimethylsulfates, diethylsulfates, nitrites, bicarbonates, carbonates, hydroxides, alkoxides, or the like, or mixtures or combinations thereof; salts of nitrogen bases; or mixtures or combinations thereof. Quaternary ammonium salts include, without limitation, quaternary ammonium salts from an amine and a quaternarization agent, such as, alkylchlorides, alkylbromide, alkyl iodides, alkyl sulfates such as dimethyl sulfate, diethyl sulfate, etc., dihalogenated alkanes such as dichloroethane, dichloropropane, dichloroethyl ether, epichlorohydrin adducts of alcohols, ethoxylates, or the like; or mixtures or combinations thereof and an amine agent, such as, alkylpyridines, especially, highly alkylated alkylpyridines, alkyl quinolines, C6 to C24 synthetic tertiary amines, amines derived from natural products such as coconuts, or the like, dialkylsubstituted methyl amines, amines derived from the reaction of fatty acids or oils and polyamines, amidoimidazolines of DETA and fatty acids, imidazolines of ethylenediamine, imidazolines of diaminocyclohexane, imidazolines of aminoethylethylenediamine, pyrimidine of propane diamine and alkylated propene diamine, oxyalkylated mono and polyamines sufficient to convert all labile hydrogen atoms in the amines to oxygen containing groups, or the like or mixtures or combinations thereof. Salts of nitrogen bases, include, without limitation, salts of nitrogen bases derived from a salt, such as: C1 to C8 monocarboxylic acids such as formic acid, acetic acid, propanoic acid, butanoic acid, pentanoic acid, hexanoic acid, heptanoic acid, octanoic acid, 2-ethylhexanoic acid, or the like; C2 to C12 dicarboxylic acids, C2 to C12 unsaturated carboxylic acids and anhydrides, or the like; polyacids such as diglycolic acid, aspartic acid, citric acid, or the like; hydroxy acids such as lactic acid, itaconic acid, or the like; aryl and hydroxy aryl acids; naturally or synthetic amino acids; thioacids such as thioglycolic acid (TGA); free acid forms of phosphoric acid derivatives of glycol, ethoxylates, ethoxylated amine, or the like, and aminosulfonic acids; or mixtures or combinations thereof and an amine, such as: high molecular weight fatty acid amines such as cocoamine, tallow amines, or the like; oxyalkylated fatty acid amines; high molecular weight fatty acid polyamines (di, tri, tetra, or higher); oxyalkylated fatty acid polyamines; amino amides such as reaction products of carboxylic acid with polyamines where the equivalents of carboxylic acid is less than the equivalents of reactive amines and oxyalkylated derivatives thereof; fatty acid pyrimidines; monoimidazolines of EDA, DETA or higher ethylene amines, hexamethylene diamine (HMDA), tetramethylenediamine (TMDA), and higher analogs thereof; bisimidazolines, imidazolines of mono and polyorganic acids; oxazolines derived from monoethanol amine and fatty acids or oils, fatty acid ether amines, mono and bis amides of aminoethylpiperazine; GAA and TGA salts of the reaction products of crude tall oil or distilled tall oil with diethylene triamine; GAA and TGA salts of reaction products of dimer acids with mixtures of poly amines such as TMDA, HMDA and 1,2-diaminocyclohexane; TGA salt of imidazoline derived from DETA with tall oil fatty acids or soy bean oil, canola oil, or the like; or mixtures or combinations thereof.

Options for controlling oxygen content includes: (1) de-aeration of the fluid prior to downhole injection, (2) addition of normal sulfides to producesulfur oxides, but such sulfur oxides can accelerate acid attack on metal surfaces, (3) the addition of salts of thiosulfate, (4) addition of erythorbates, ascorbates, diethylhydroxyamine or other oxygen reactive compounds that are added to the fluid prior to downhole injection; and (5) addition of corrosion inhibitors or metal passivation agents such as potassium (alkali) salts of esters of glycols, polyhydric alcohol ethyloxylates or other similar corrosion inhibitors. Examples include oxygen and corrosion inhibiting agents include mixtures of tetramethylene diamines, hexamethylene diamines, 1,2-diaminecyclohexane, amine heads, or reaction products of such amines with partial molar equivalents of aldehydes. Other oxygen control agents include salicylic and benzoic amides of polyamines, used especially in alkaline conditions, short chain acetylene diols or similar compounds, phosphate esters, borate glycerols, urea and thiourea salts of bisoxalidines or other compound that either absorb alkyl isoquinoline, pyrazine and alkyl pyrazine or mixture of alkyl pyrazine, quinoxaline and alkyl quinoxaline or mixture of alkyl quinoxaline, acridine and alkyl acridine or mixture of alkyl acridine, pyrimidine and alkyl pyrimidine or mixture of alkyl pyrimidine, quinazoline and alkyl quinazoline or mixture of alkyl quinazoline, or mixtures or combinations thereof. Additionally, amines comprise polymers and copolymers of vinyl pyridine, vinyl substituted pyridine, vinyl pyrrole, vinyl substituted pyrroles, vinyl piperidine, vinyl substituted piperidines, vinyl pyrrolidine, vinyl substituted pyrrolidines, vinyl indole, vinyl substituted indoles, vinyl imidazole, vinyl substituted imidazole, vinyl quinoline, vinyl substituted quinoline, vinyl isoquinoline, vinyl substituted isoquinoline, vinyl pyrazine, vinyl substituted pyrazine, vinyl quinoxaline, vinyl substituted quinoxaline, vinyl acridine, vinyl substituted acridine, vinyl pyrimidine, vinyl substituted pyrimidine, vinyl quinazoline, vinyl substituted quinazoline, or mixtures and combinations thereof.

Agglomeration Agents include organo siloxanes, amines comprises aniline and alkyl anilines or mixtures of alkyl anilines, pyridines and alkyl pyridines or mixtures of alkyl pyridines, pyrrole and alkyl pyrroles or mixtures of alkyl pyrroles, piperidine and alkyl piperidines or mixtures of alkyl piperidines, pyrrolidine and alkyl pyrrolidines or mixtures of alkyl pyrrolidines, indole and alkyl indoles or mixture of alkyl indoles, imidazole and alkyl imidazole or mixtures of alkyl imidazole, quinoline and alkyl quinoline or mixture of alkyl quinoline, isoquinoline and alkyl isoquinoline or mixture of

Foaming Agents include suitable sodium salts of alpha olefin sulfonates (AOSs), include, without limitation, any alpha olefin sulfonate. Preferred AOSs including short chain alpha olefin sulfonates having between about 2 and about 10 carbon atoms, particularly, between 4 and 10 carbon atoms, longer chain alpha olefin sulfonates having between about 10 and about 24 carbon atoms, particularly, between about 10 and 16 carbon atoms or mixtures or combinations thereof.

Suitable foam modifiers that can be used in place of or in conjunction with AOS include, cyclamic acid salts such as sodium (cyclamate), potassium, or the like, salts of sulfonated methyl esters having between about 12 and about 22 carbon atoms, where the salt is sodium, potassium, ammonium, alkylammonium, 2-aminoethanesulfonic acid (taurine) or the like such as Alpha-Step MC-48 from Stepan Corporation. Other additives includes salts of 2-aminoethane sulfonic acids, where the salt is an alkali metal, ammonium, alkylammonium, or like counterions.

Suitable fatty acids include, lauric acid, oleic acid, stearic acid or the like or mixtures or combinations.

Suitable foam enhancers include, a foam enhancer selected from the group consisting of a linear dodecyl benzene sulfonic acid salt, a sarcosinate salt, and mixtures or combinations thereof. Preferred linear dodecyl benzene sulfonic acid salt include, ammonium linear dodecyl benzene sulfonic acid, alkylammonium linear dodecyl benzene sulfonic acid, alkanolamine ammonium linear dodecyl benzene sulfonic acid, lithium linear dodecyl benzene sulfonic acid, sodium linear dodecyl benzene sulfonic acid, potassium, cesium linear dodecyl benzene sulfonic acid, calcium linear dodecyl benzene sulfonic acid, magnesium linear dodecyl benzene sulfonic acid and mixtures or combinations thereof. Preferred sarcosinates include, sodium lauryl sarcosinate, potassium lauryl sarcosinate, HAMPOSYL N-Acyl Sarcosinate Surfactants, Sodium N-Myristoyl Sarcosinate, and mixtures or combinations thereof.

De-emulsifier's include soap, naphtenic acid salts and alkylaryl sulphonate, sulphated caster oil petroleum sulphonates, derivatives of sulphoacid oxidized caster oil and sulphosucinic acid ester, fatty acids, fatty alcohols, alkylphenols, ethylene oxide, propylene oxide copolymer, alkoxylated cyclic p-alkylphenol formaldehyde resins, amine alkoxylate, alkoxylated cyclic p-alkylphenol formaldehyde resins, polyesteramine and blends. Also included are antifoamers wherein the major constituent would include no-polar oils, such as minerals and silicones or polar oils such as fatty alcohols, fatty acids, alkyl amines and alkyl amides.

The surfactants may be, for instance, silanes, siloxanes, fluorosurfactants, fluorinated surfactants, dihydroxyl alkyl glycinate, alkyl ampho acetate or propionate, alkyl betaine, alkyl amidopropyl betaine and alkylamino mono- or di-propionates derived from certain waxes, fats and oils. Including, amphoteric/zwitterionic surfactants, in particular those comprising a betaine moiety.

Tracers may be a dye, fluorescer or other chemical which can be detected using spectroscopic analytical methods such as UV-visible, fluorescence or phosphorescence. Compounds of lanthanide elements may be used as tracers because they have distinctive spectra. A tracer may be a chemical with distinctive features which enables it to be distinguished by another analytical technique such as GC-MS. Such chemicals include fluorocarbons and fluoro-substituted aromatic acids. Radio-isotopes may be used as tracers. Salts of ions which do not occur naturally in subterranean reservoirs, such as iodides and thiocyanates may also be used as a tracer.

The invention provides a method of reducing the cost and environmental impact of chemicals used in hydraulic fracturing is to use multiple chemicals that are pre-mixed and then formed into a single solid blended mixture. By forming at least two chemicals into a single solid mixture, the complexity involved in transporting multiple solid or liquid chemicals is avoided. If the solid chemicals were merely premixed they would tend to segregate during shipping, handling, and storage altering the concentration of the chemical mix as it is pumped downhole. Simply having less equipment on the wellsite increases the accuracy of the well treating process and decreases the likelihood of a time consuming and thus costly delay due to equipment failure.

While the embodiments are described with reference to various implementations and exploitations, it will be understood that these embodiments are illustrative and that the scope of the inventive subject matter is not limited to them. Many variations, modifications, additions and improvements are possible.

Plural instances may be provided for components, operations or structures described herein as a single instance. In general, structures and functionality presented as separate components in the exemplary configurations may be implemented as a combined structure or component. Similarly, structures and functionality presented as a single component may be implemented as separate components. These and other variations, modifications, additions, and improvements may fall within the scope of the inventive subject matter.

## Claims

1. A process for manufacturing a well treatment material comprising:
introducing a first chemical compound into a first measuring vessel;
introducing an at least second chemical compound into an at least second measuring vessel;
wherein the first chemical compound and the at least second chemical compound are materials useful for treating a hydrocarbon producing well;
delivering the first chemical compound and the at least second chemical compound to a mixing vessel;
combining the first chemical compound and the at least second chemical compound;
forming the combined first chemical compound and the at least second chemical compound into a pellet.

2. The process for manufacturing a well treatment material of claim 1 wherein at least a third chemical compound is introduced into a measuring vessel; wherein the third chemical compound is useful for treating a hydrocarbon producing well; and wherein the third chemical compound is combined with the first chemical compound and the second chemical compound.

3. The process for manufacturing a well treatment material of claim 2 wherein the combined first chemical compound, the second chemical compound, and the at least third chemical compound are formed into a pellet.

4. The process for manufacturing a well treatment material of any preceding claim wherein the materials useful for treating a wellbore are a friction reducer, a gelling agent, a clay control agent, a biocide, a scale inhibitor, a chelating agent, a gel-breaker, a defoamer, a crosslinker, an anti-sludging agent, a corrosion inhibitor, a de-emulsifier, a foaming agent, an agglomerating agent, a surfactant, or a tracer.

5. The process for manufacturing a well treatment material of any preceding claim wherein one or both of the first chemical compound and the second chemical compound is a solid.

6. The process for manufacturing a well treatment material of any preceding claim wherein the first chemical compound and the at least second chemical compound are powder.

7. The process for manufacturing a well treatment material of claim 6 wherein hydraulic or mechanical pressure is used to form the mixed powders into a tablet.

8. The process for manufacturing a well treatment material of any preceding claim wherein at least one of the chemical compounds is a wet cake, and wherein pellets are formed from the wet cake.

9. A pellet comprising two or more ingredients active for treating a wellbore.

10. The pellet of claim 9 wherein the materials useful for treating a wellbore comprise: a friction reducer, a gelling agent, a clay control agent, a biocide, a scale inhibitor, a chelating agent, a gel-breaker, a defoamer, a crosslinker, an anti-sludging agent, a corrosion inhibitor, a de-emulsifier, a foaming agent, an agglomerating agent, a surfactant, or a tracer.

11. A method of preparing fluids to treat a well comprising:
providing a pellet;
wherein the pellet has at least two ingredients active for treating a wellbore;
introducing the pellet into a mixing chamber with a sufficient amount of a fluid to form a mixture;
wherein the ingredients active for treating a wellbore are dispersed in the fluid.

12. The method of preparing fluids to treat a well of claim 11 wherein the pellet includes a hydratable polymer and at least one active ingredient.

13. The method of preparing fluids to treat a well of claim 11 or claim 12 wherein the at least two ingredients active for treating a wellbore are solids.

14. The method of claim 11 or claim 12 wherein a first ingredient active in treating a wellbore is a polymer;
the at least second ingredient active for treating wellbore is a liquid;
wherein the first ingredient active in treating a wellbore is coated with the at least second ingredient active in treating a wellbore.

15. The method of any of claims 11 to 14 wherein a dry composition of polymer is obtained incorporating the required chemical additives into a monomer solution before a polymerization reaction, or by incorporating the required chemical additives into a reacted polymer wet-cake immediately following the polymerization of a friction reducing polymer.
